# EUROPÄISCHE PATENTSCHRIFT

(11) **EP 2 538 189 B1**
(45) Veröffentlichungstag und Bekanntmachung des Hinweises auf die Patenterteilung: **17.08.2016**
(21) Anmeldenummer: 11170851.7
(22) Anmeldetag: 22.06.2011
(51) Int. Cl.: G01L 1/22, G01L 5/00, G01L 5/10, G01M 1/12

(54) **Kraftmess-Hülse sowie Verfahren zur Kraftberechnung**
Power measurement casing and power measurement method
Douille de mesure de force et procédé de calcul de force

(43) Veröffentlichungstag der Anmeldung: 26.12.2012
(73) Patentinhaber: Brosa AG, 88069 Tettnang (DE)
(72) Erfinder: Pfeffer, Otto, 88069 Tettnang (DE)
(74) Vertreter: Witte, Weller & Partner Patentanwälte mbB

(56) Entgegenhaltungen:
- EP-A1- 0 120 136
- DE-A1- 19 960 786
- US-A1- 2007 266 601

## Beschreibung

Die Erfindung bezieht sich auf eine Kraftmess-Hülse mit mindestens einer inneren und äußeren Kraftübertragungsfläche, die konzentrisch zu der Längsachse der Hülse verlaufen, wobei die erfindungsgemäße Kraftmess-Hülse beispielsweise in einem Kranausleger eingebaut ist und auf der mindestens eine Seilrolle aufgesetzt ist, auf der ein Seil mit einer aufzunehmenden Last abrollt.

Eine Kraftmess-Hülse der bekannten Art ist beispielsweise aus der PCT/EP 2011/052708 zu entnehmen. Bei dieser Kraftmess-Hülse ist die äußere oder innere Kraftübertragungsfläche als umlaufendes Auflager ausgestaltet, das entweder von der Kraftmess-Hülse nach außen absteht oder in das Innere der Kraftmess-Hülse ragt. Fluchtend zu der Symmetrieachse des Auflagers sind Ausnehmungen vorgesehen, in die eine Kraftmessstelle in Form von Dehnungmessstreifen vorgesehen ist. Die Kraftmess-Hülse weist eine Innen- oder Außenmantelfläche auf, die vollständig auf einer Welle bzw. Achse oder an der Innenseite einer Umlenkrolle oder eines Zahnrades bzw. deren Lagerschalen anliegt.

Des Weiteren kann mit der bekannt gewordenen Kraftmess-Hülse ein Mess- und Berechnungsverfahren zur Bestimmung des Umschlingungswinkels eines auf einer Seilrolle umlaufenden Seils ermittelt werden. Auch die von dem Seil auf die Seilrolle und von diesem auf die Kraftmess-Hülse übertragenen Kräfte können sowohl in ihrer Wirkungsrichtung als auch betragsmäßig ermittelt werden.

Die von dem Seil auf die Umlenkrolle und damit auf die Kraftmess-Hülse übertragenen Kraftanteile sind jedoch nachteiligerweise lediglich in radialer Richtung erfassbar. Wenn beispielsweise Kranauslegerarme eine Last aufnehmen sollen, die bezogen auf die Spitze des Kranauslegerarmes und damit der Kraftmess-Hülse außerhalb der Vertikalen angeordnet sind, dann entstehen Querkräfte. Solche Lasten können sowohl seitlich als auch vor bzw. hinter der Spitze des Kranauslegerarmes aufzunehmen sein. Solche Probleme treten beispielsweise bei Mobilkranen auf, die an eine Last aufgrund von Behinderungen nicht optimal heranfahren können.

Aus der DE 199 60 786 A1 ist ein Radialkraftaufnehmer bekannt geworden, der als Ring oder Hülse ausgestaltet ist und auf eine Welle oder Achse aufgeschoben wird. Der Radialkraftaufnehmer weist in den Stirnseiten eingearbeiteten Nuten auf, in denen Dehnmessstreifen zur Bildung einer Messstelle angeordnet sind. Die Nuten verlaufen demnach parallel zu der Längsachse der Hülse und liegen fluchtend zueinander, so dass zwischen diesen eine entsprechende Verjüngung entsteht. Auf die Welle oder Achse wird eine Radialkraft F_{1y} eingeleitet, durch die die Welle oder Achse durchgebogen ist, so dass diese Biegekräfte auf die Hülse, die beispielsweise in einen Maschinenrahmen eingespannt ist, übertragen werden, so dass durch die Verformung der Hülse, insbesondere zwischen den beiden gegenüberliegenden Nuten, entsprechende Messwerte ermittelbar sind.

Durch die Anordnung und Ausgestaltung der Nuten können ausschließlich nachteiligerweise Biegekräfte, die durch die Radialkräfte entstehen, erfasst werden.

Aus der US 2007/0266601 A1 ist ein Kraftmesskörper zu entnehmen, durch den radial wirkende Kräfte Py zu erfassen sind. Dieser Kraftmesskörper weist zwar zwei umlaufende, also konzentrisch um die Längsachse des Messkörpers angeordnete Nuten auf, in denen Messstreifen angeordnet sind, jedoch handelt es sich bei dem dort offenbarten Gegenstand um ein völlig anderes technisches Messkonzept.

Bei den Gegenständen der beiden vorgenannten Druckschriften fehlen insbesondere klar definierte Wege bezüglich der Kraftein- und der Kraftausleitung in Bezug auf die vorhandenen Messstellen, so dass die Messergebnisse physikalisch nicht nachprüfbar sind oder lediglich begrenzte Kräfte erfasst werden können, denn wenn die Radialkräfte zunehmen, entstehen unkontrollierbare Biegungen und Scherungen in der Achse, so dass die erfassten Messwerte verfälscht sind.

Aus der EP 0 120 136 A1 ist ein Verfahren zur indirekten Messung von Winkeln bekannt geworden.

Es ist daher Aufgabe der Erfindung eine Kraftmess-Hülse der eingangs genannten Gattung derart weiterzubilden, dass durch diese sowohl die tangentiale als auch die radiale Krafteinwirkung ermittelbar ist, und dass gleichzeitig ein zuverlässiges und physikalisch überprüfbares Messergebnis vorliegt, durch das der Kranauslegerarm in eine optimale Position zur Aufnahme einer Last einstellbar ist.

Diese Aufgabe ist dadurch gelöst, dass die innere Kraftübertragungsfläche als zweiteilige zueinander beabstandete Ringflächen ausgestaltet ist, die auf einer in die Hülse eingesetzten Welle oder Achse anliegen und durch die die auf die Hülse einwirkenden Kräfte übertragen sind, dass die Ringflächen unmittelbar benachbart zu der jeweiligen Stirnseite der Kraftmess-Hülse angeordnet sind, dass seitlich versetzt und beabstandet zu einer oder zu den beiden Ringflächen jeweils eine in die Außen- und/oder Innenmantelfläche der Kraftmess-Hülse umlaufende Nut eingearbeitet ist, dass in die jeweilige Nut mindestens eine Kraftmessstelle, vorzugsweise in Form von Dehnmessstreifen, vorgesehen ist, dass seitlich versetzt zu den beiden Nuten die äußere Kraftübertragungsfläche angeordnet ist und dass die fluchtend zu der äußeren Kraftübertragungsfläche verlaufende innere Mantelfläche von der in die Kraftmess-Hülse eingeschobenen Welle oder Achse beabstandet ist.

Weitere vorteilhafte Ausgestaltungen der Erfindung ergeben sich aus den Unteransprüchen.

Dadurch dass die innere und äußere Kraftübertragungsfläche in Achsrichtung der Kraftmess-Hülse zueinander versetzt angeordnet sind, und zwar vorteilhafter Weise derart, dass die äußere Kraftübertragungsfläche zwischen zwei inneren Kraftübertragungsflächen verläuft, ist erreicht, dass der Kraftverlauf innerhalb der Kraftmess-Hülse eine bestimmte vorgegebenen Struktur durchfließt. Wenn demnach zwischen dem inneren und der äußeren Kraftübertragungsfläche eine Nut in die äußere und/oder innere Mantelfläche der Kraftmess-Hülse eingearbeitet ist, und wenn in die Nut eine oder mehrere Kraftmessstellen vorzugsweise in Form von Dehnmessstreifen vorgesehen sind, wird die Kraft von der äußeren Kraftübertragungsfläche durch die Messstellen definiert geleitet. Ein solcher Kraftverlauf kann in den einzelnen Messstellen gemessen werden, so dass Rückschlüsse aufgrund von mathematischen bzw. physikalischen Berechnungen vorgenommen werden können, durch die der Kraftanteil seitlich versetzt zu den jeweiligen Kraftmessstellen in zwei senkrecht zueinander stehenden Ebenen errechenbar ist. Somit können sowohl Flieg- als auch Schwerkräfte exakt bestimmt werden.

Eine solche Berechnungs- und Auswertungsmethode ist deswegen besonders vorteilhaft, denn insbesondere bei mobilen Kranen sind Lasten aufzunehmen, die oftmals nicht exakt unterhalb, also fluchtend zu der Spitze des Kranauslegearmes, positioniert sind. Der mobile Kran kann nämlich aufgrund von Behinderungen durch be nachbarte Kräne oder anderen Gegenständen die aufzunehmende Last nicht optimal anfahren, so dass dann der Kranauslegerarm derart zu positionieren ist, dass bei dem Anheben der Last zum einen das Schwingverhalten der Last berücksichtigt ist, wenn diese außermittig, also seitlich und/oder vorne oder hinten positionierte Last aufgenommen ist und gleichzeitig soll zum anderen bei einer solchen Krafteinwirkung auf den Kraftauslegerarm dieser eine ausreichend hohe Sicherheit gegenüber Beschädigungen durch das Schwingverhalten der Last aufweisen Es ist daher erforderlich, sowohl den Winkel des Kranauslegerarmes aus der Horizontalen als auch die optimale Position des mobilen Kranes zur Positionierung bezogen auf die aufzunehmende Last zu errechnen.

Mit Hilfe der erfindungsgemäßen Kraftmess-Hülse kann eine solche Berechnungsmethode zur Verfügung gestellt werden, denn zum einen ermöglicht die Anordnung der einzelnen Kraftmessstellen im inneren oder äußeren Bereich der Mantelfläche der Kraftmess-Hülse, dass die aufzunehmenden Gewichtskräfte in Abhängigkeit von der Umschlingung und damit von der Winkelposition des Kranauslegerarmes in vertikaler und horizontaler Richtung errechnet werden kann und zum anderen ist aufgrund der Aufspaltung der einzelnen Kraftanteile feststellbar, in welchem Quadranten die Last positioniert ist bezogen auf die Spitze des Kranauslegerarms, der virtuell den Ursprung eines üblichen X-Y-Koordinatensystems bildet und wenn eine der seitlich, also in Längsrichtung der Kraftmess-Hülse wirkender Kraftanteil einen vorgegebenen Sollwert übersteigt, dann ist der Kranauslegerarm in Richtung des entsprechenden Quadranten zu verfahren, um diesen Auslenkwinkel zwischen der aufzunehmenden Last und der Spitze des Kranauslegerarmes zu reduzieren. Zudem ist die Neigung des Kranauslegerarmes an die Position der Last optimal einstellbar.

Die erfindungsgemäße Kraftmess-Hülse kann daher vorteilhafter Weise dazu verwendet werden, die optimale Position des Kranauslegerarmes bezogen auf eine aufzunehmende Last zu errechnen und zu verifizieren, dass beim Anheben der Last aus der Vertikalen keine derartigen Querkräfte auf den Kranauslegerarm einwirken, durch die dieser möglicherweise beschädigt wird und damit für die nähere Umgebung ein erhebliches Sicherheitsrisiko besteht.

In der Zeichnung ist ein erfindungsgemäßes Ausführungsbeispiel einer Kraftmess-Hülse dargestellt, die nachfolgend näher erläutert ist. Im Einzelnen zeigt:
- Figur 1: eine Kraftmess-Hülse, mit zwei Ringflächen, die gemeinsam eine innere Kraftübertragungsfläche bilden, und mit einer äußeren Kraftübertragungsfläche, zwischen denen jeweils eine umlaufende Nut in die innere und äußere Mantelfläche der Kraftmess-Hülse eingearbeitet ist, in denen versetzt zueinander Kraftmessstellen mit Dehnmessstreifen gebildet sind, in perspektivischer Ansicht,
- Figur 2: die Kraftmess-Hülse gemäß Figur 1 in Draufsicht,
- Figur 3: die Kraftmess-Hülse gemäß Figur 1 entlang der Schnittlinie III-III mit einer in die Kraftmess-Hülse eingesetzten Welle,
- Figur 4a: die Kraftmess-Hülse gemäß Figur 3 in einem bestimmten schematisch dargestellten Anwendungsfall,
- Figur 4b: die Kraftmess-Hülse gemäß Figur 3 mit unterschiedlichen Anwendungsbeispielen,
- Figur 5a: einen mobilen Kran mit einem Auslegerarm, an dessen Spitze die Kraftmess-Hülse gemäß Figur 3 eingebaut ist zur Aufnahme einer Last,
- Figur 5b: ein Berechnungsbeispiel für die in Figur 5a eingebaute KraftmessHülse,
- Figur 6a: den mobilen Kran gemäß Figur 5a mit einer seitlich neben dem Auslegerarm positionierten Last,
- Figur 6b: ein Berechnungsbeispiel für den Anwendungsfall gemäß Figur 6a und
- Figur 7: eine schematische Darstellung des Kraftflusses im Inneren der Kraftmess-Hülse gemäß Figur 1.

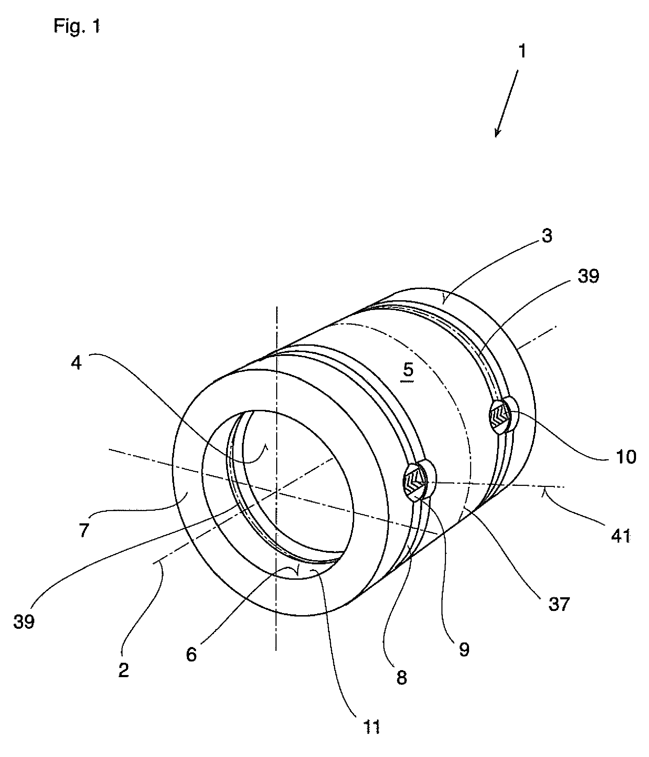

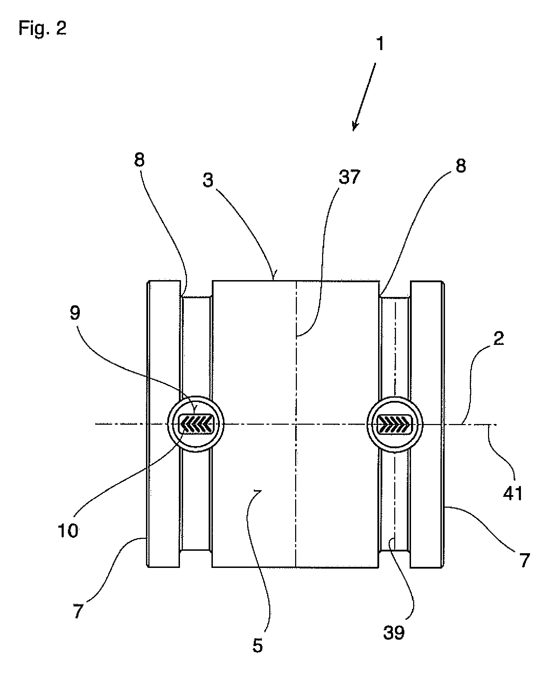

In den Figuren 1 und 2 ist eine Kraftmess-Hülse 1 abgebildet, durch die vertikal und horizontal auf diese einwirkenden Kräfte F₁, Fₙ ermittelbar sind, um beispielsweise einen Mobil-Kran 21 mit einem Auslegerarm 22 derart an eine aufzunehmende Last 19 positionieren zu können, dass in Abhängigkeit von der Gewichtskraft der Last 19 und des Versatzes der Last 19 bezogen auf ein X-Y-Koordinatensystem 24 eine optimale Einstellung des Kranauslegerarmes 22 gewährleistet ist, um Überlasten an dem Kranauslegerarm 22 zu verhindern, die insbesondere bei einer Positionierung des Kranes 21 bezogen auf die Last 19 erfolgen kann, wenn der Auslegerarm 22 nicht zwischen einem Ist- und einem Sollbereich bezogen auf das X-Y-Koordinatensystem 24 ausgerichtet ist.

Durch die erfindungsgemäße Kraftmess-Hülse 1 sollen demnach die Abstände des Kranes 21 sowie die Stellung des Kranauslegerarmes 22 bezogen auf die aufzunehmende Last 19 errechenbar und korrigierbar sein.

Die Kraftmess-Hülse 1 weist eine Längsache 2 auf, um die konzentrisch eine äußere und innere Mantelfläche 3 bzw. 4 verlaufen. Die äußere Mantelfläche 3 besteht dabei aus einer äußeren Kraftübertragungsfläche 5 deren konzentrisch um die Längsachse 2 verlaufende Symmetrieachse 37 von den beiden Stirnseiten 7 der Kraftmess-Hülse 1 gleichmäßig beabstandet ist, so dass die konzentrische Symmetrieachse 37 der äußeren Kraftübertragungsfläche 5 fluchtend zu der mittigen Querebene der Kraftmess-Hülse 1 verläuft. Seitlich versetzt zu den beiden Randbereichen der äußeren Kraftübertragungsfläche 5 ist jeweils eine konzentrisch um die Längsachse 2 verlaufende Nut 8 eingearbeitet. In jeder der beiden Nuten 8 sind gleichmäßig zueinander versetzt angeordnete Kraftmessstellen 9 vorgesehen. Die Kraftmessstellen 9 werden durch Dehnmessstreifen 10, die in Form einer Wheatonschen Brücke zusammengeschaltet sind, gebildet. Die Kraftmessstellen 9 der beiden Nuten 8 können dabei auf einer gemeinsamen Achse 41 positioniert sein. Es ist jedoch auch denkbar, die Kraftmessstellen 9 in den beiden umlaufenden Nuten 8 versetzt zueinander anzuordnen. Durch die Kraftmessstellen 9 sollen Kraftanteile Fₖ₁ bis Fₖₙ messbar sein. Die symmetrischen Abstände zwischen den Nuten 8 und der äußeren Kraftübertragungsfläche 5 sind an vorgegebenen Einsatzsituationen anpassbar und können daher variieren.

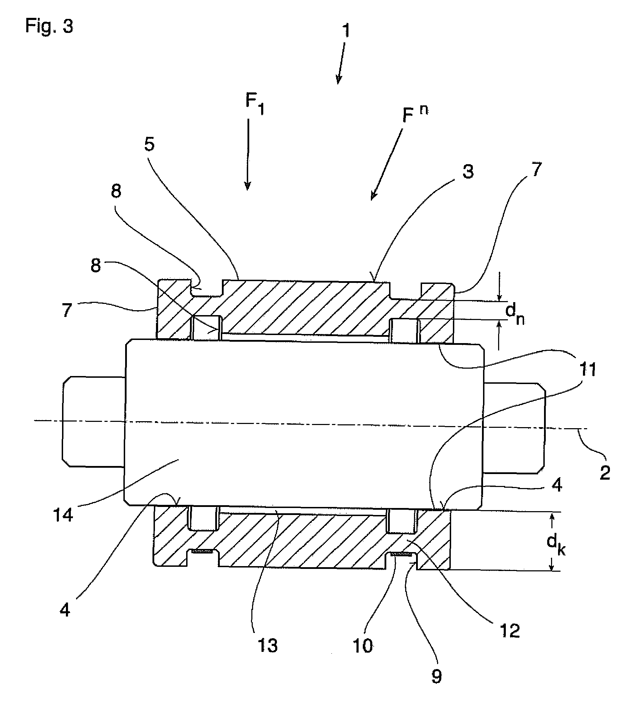

Insbesondere aus Figur 3 ist ersichtlich, dass in die Kraftmess-Hülse 1 eine Welle 14 eingesetzt ist. Die fluchtend unterhalb der äußeren Kraftübertragungsfläche 5 verlaufende innere Mantelfläche 4 ist dabei zu der Mantelfläche der Welle 14 beabstandet, so dass zwischen der Welle 14 und der inneren Mantelfläche 3 fluchtend im Bereich der äußeren Kraftübertragungsfläche 5 ein Luftspalt 13 entsteht.

Die Welle 14 liegt vielmehr an der inneren Kraftübertragsfläche 6 an, die zweiteilig ausgestaltet ist und jeweils im Bereich der Stirnseite 7 der Kraftmess-Hülse 1 verläuft. Die zweiteilige innere Kraftübertragungsfläche 6 ist dabei als Ringfläche 11 ausgestaltet und liegt auf der Welle 14 an. Im Belastungszustand werden die Ringflächen 11 - zumindest bereichsweise - derart auf die Welle 14 aufgedrückt, dass keinerlei Spiel herrscht zwischen den Ringflächen 11 und der Welle 14.

In den gezeigten Ausführungsbeispielen sind sowohl in die äußere als auch in die innere Mantelfläche 3, 4 die umlaufenden Nuten 8 eingearbeitet, die jeweils fluchtend zueinander verlaufen. Die Kraftmessstelle 9 kann sowohl in der nach außen und/oder in der nach innen ausgerichteten Nut 8 positioniert sein. Für die auf die äußere Kraftübertragungsfläche 5 einwirkenden Kräfte F₁,..., Fₙ ist entscheidend, dass diese durch die zwischen der äußeren und inneren Nut 8 vorhandene Wandstärke dₙ von der äußeren Kraftübertragungsfläche 5 zu den beiden stirnseitigen Ringflächen 11 geführt sind. Die Wand zwischen der äußeren und inneren Nut 8 wird dabei als Membrane 12 verstanden, denn die Wandstärke dₙ im Bereich der Nuten 8 ist etwa halb so groß wie die Wandstärke dₖ der Kraftmess-Hülse 1 zwischen der äußeren und inneren Mantelfläche 3, 4. Wenn daher die auf die äußere Mantelfläche 5 einwirkenden Kräfte F₁, ..., Fₙ auftreten, werden diese aufgrund des Luftspaltes 13 nicht unmittelbar an die Welle 14 übertragen, sondern vielmehr durch die Membrane 12 zu den beiden stirnseitig verlaufenden Ringflächen 11 der inneren Kraftübertragungsfläche 3 geleitet, so dass dort die Kräfte F₁, ..., Fₙ in die Welle 14 geleitet sind.

Die im Bereich der Membrane 12 vorgesehene Kraftmessstelle 9 wird daher durch die jeweiligen dort auftretenden Kräfte bzw. deren Kraftanteile Fₖ₁, ..., Fₖₙ in Wirkverbindung treten und ein entsprechendes, wie nachfolgend noch näher erläutert wird, Messergebnis ermittelbar sein. Es spielt dabei für die Berechnung der Kraftanteile Fₖ₁ bis Fₖₙ keine Rolle, an welcher Position und unter welchem Wirkungswinkel die Kräfte F₁, ..., Fₙ auf die äußere Kraftübertragungsfläche 5 einwirken, denn die Kräfte F₁, ..., Fₙ beinflussen die Membrane 12, so dass die Kraftanteile Fₖ₁ bis Fₖₙ in horizontaler und vertikaler Richtung errechenbar sind, woraus die Resultierende, die auf die Hülse 1 einwirkt, sowie deren Wirkungsrichtung errechenbar ist.

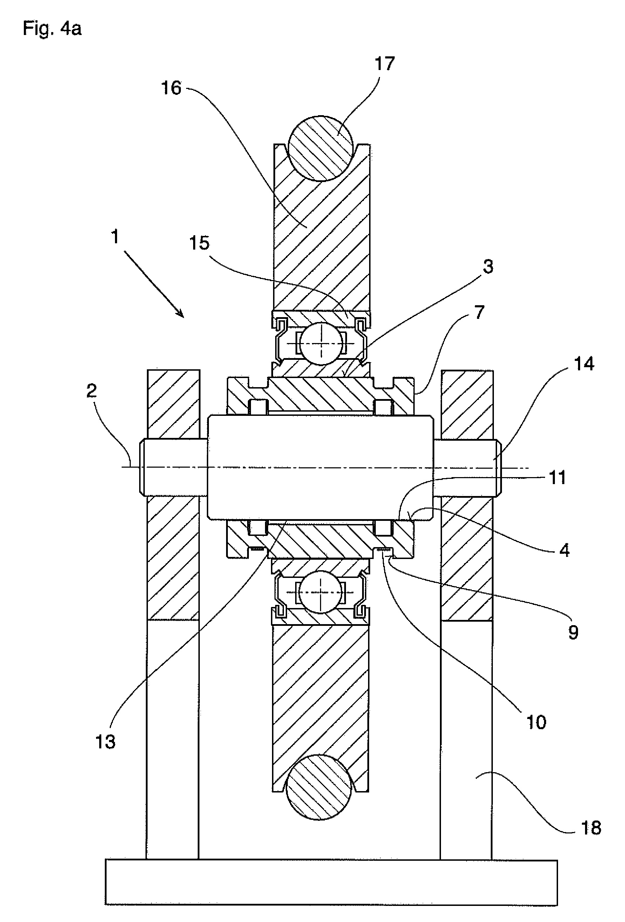

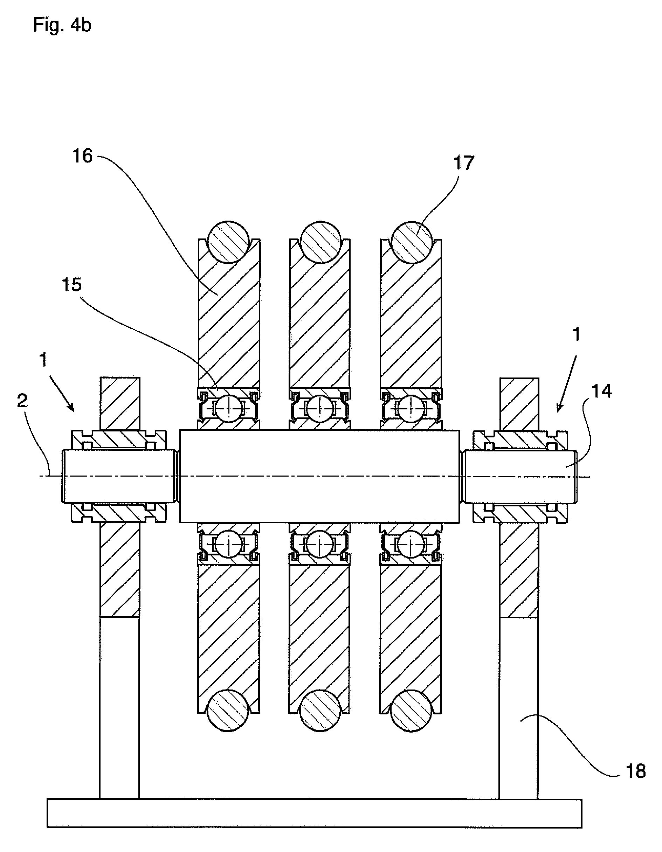

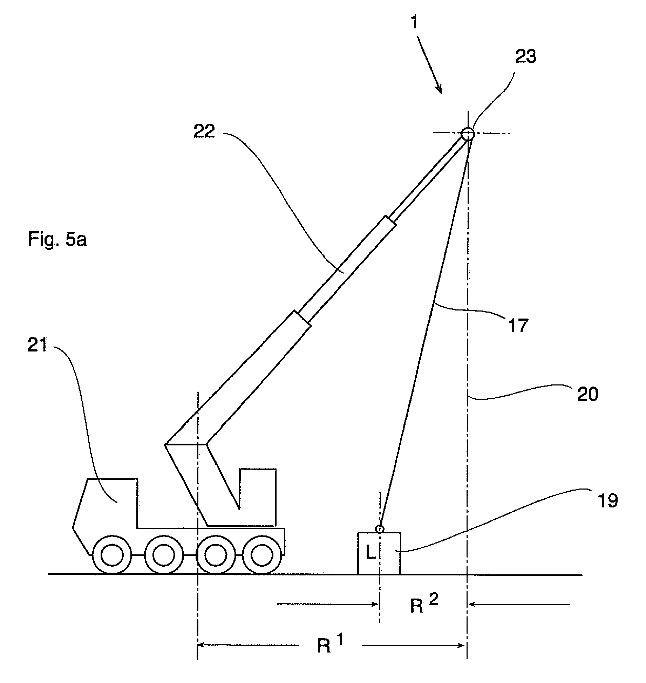

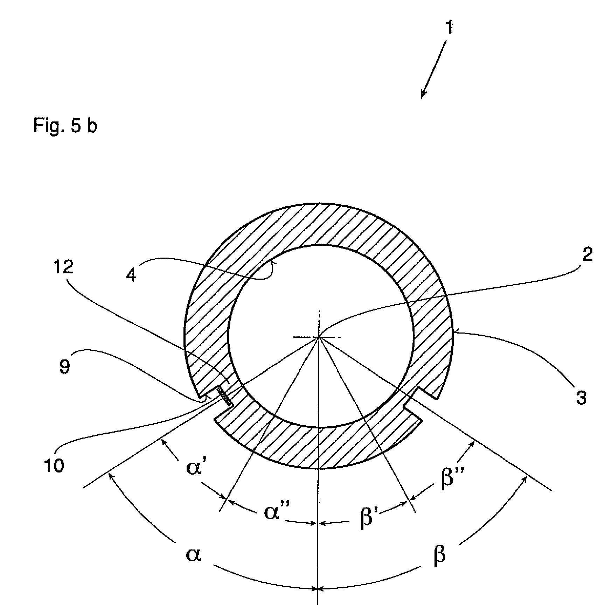

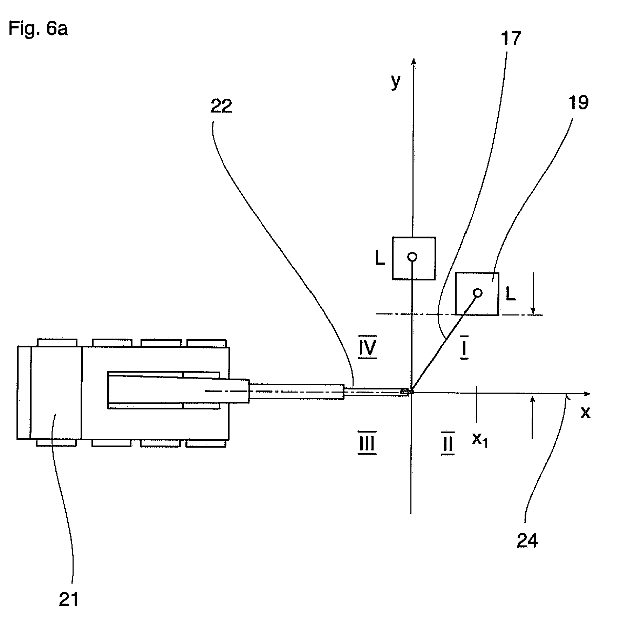

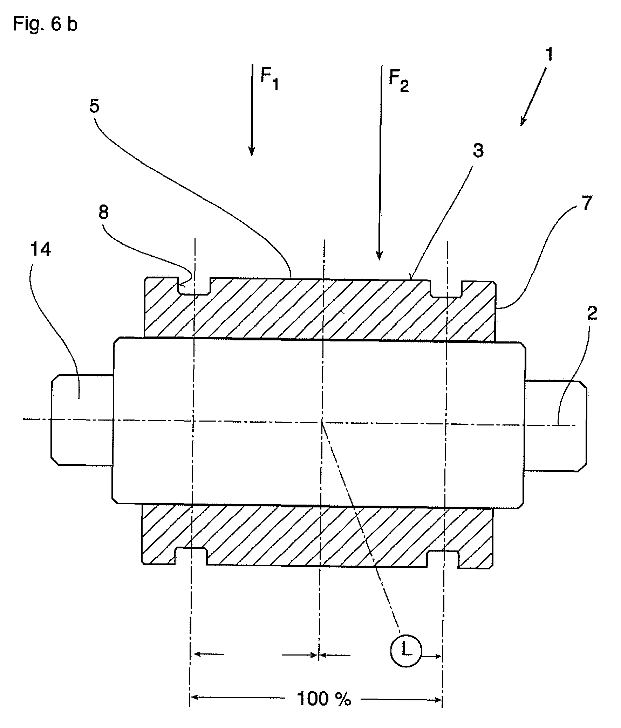

In den Figuren 4a und 4b sind zwei Anwendungsfälle allgemeiner Art abgebildet. In einem Gestell 18 ist die Welle 14 oder eine Achse gehalten. Die Kraftmess-Hülse 1 ist auf diese aufgesetzt und beispielsweise drehfest verbunden. Der äußeren Kraftübertragungsfläche 5 ist ein Lager 15, beispielsweise in Form eines Kugelwälzlagers, zugeordnet, auf dem eine Seilrolle 16 drehbar gehalten ist. Auf der Seilrolle 16 ist ein Seil 17 mit einem sich ständig veränderten Umschlingungswinkel aufgerollt. Mittels der Kraftmess-Hülse 1 soll nunmehr die Belastung und die horizontal sowie vertikal wirkenden Kraftanteile Fₖ₁ bis Fₖₙ der auf die Kraftmess-Hülse 1 einwirkenden Kräfte F₁, ..., Fₙ bestimmt werden können. Wenn nämlich bekannt ist, welcher Versatz der Kraftanteile Fₖ₁ bis Fₖₙ auf die Kraftmess-Hülse 1 einwirkt, dann kann nach den Figuren 5a und 6a ein Mobil-Kran 21 derart zu der aufzunehmenden Last 19 positioniert werden, dass auf den Auslegerarm 22 des Kranes 21 einwirkende Kräfte beherrschbar sind und keine unzulässigen Schwingungen der Last 19 und Überlast an der Spitze 23 des Kranauslegerarmes 22 entstehen. Die Berechnungsmethode ist für die jeweiligen Anwendungsfälle der Figuren 5a und 6a in den Figuren 5b bzw. 6b abgebildet.

Ist der Kran 21 zu nah oder zu weit entfernt von der aufzunehmenden Last 19 positioniert, kann durch Anheben oder Absenken des Kranauslegerarmes 22 eine optimale Neigungseinstellung erreicht werden, um das Schwingungsverhalten der aus dem Ursprung des Koordinatensystems 24 versetzten Last 19 zu minimieren und um Überlasten an der Spitze 23 des Kranauslegerarmes 22 zu verhindern, denn in der Spitze 23 ist die Kraftmess-Hülse 1 eingebaut, so dass durch diese gemäß der Figur 5b und aufgrund der konstruktiven Ausgestaltung und Anordnung der Kraftmessstellen 9 und des Verlaufes der in der Kraftmess-Hülse 1 wirkenden Kraftanteile Fₖ₁ bis Fₖₙ, deren exakte Wirkungsrichtung mit errechenbar ist. Mit Hilfe des Versatzes der Kräfte Fₖ₁ bis Fₖₙ also welche Kraftanteile in horizontaler und vertikaler Richtung der Kraftmess-Hülse 1 im Bereich der Membrane 12 jeweils wirken, ist eine Berechnung möglich, ob der Kran 21 und/oder dessen Auslegerarm 22 in ihrer jeweiligen Position bzw. Winkelstellung zu verändern ist. Die Abfrage, ob die aufzunehmende Last 19 korrekt zwischen einen Ist- und Sollwertgrenzbereich angehoben ist, kann nach Verfahren des Mobil-Krans 21 bzw. nach der Änderung der Winkelstellung des Kranauslegerarmes 22 bezogen auf die Horizontale oder Vertikale erneut durchgeführt werden, um zu verifizieren, dass nunmehr die korrekte Position des Krans 21 bzw. die Winkelstellung und Neigung des Kranauslegerarmes 22 erreicht ist.

Gemäß Figur 6a ist die Last 19 seitlich versetzt zu dem Kranauslegerarm 22 angeordnet. Die Spitze 23 des Kranauslegerarms 22 bildet dabei den virtuellen Ursprung oder Nullstellung des Koordinatensystemes 24. Die Last 19 kann demnach in einem der vier Quadranten des Koordinatensystemes 24 angeordnet sein. Bei der Überlagerung der Berechnungsmethoden gemäß den Figuren 5b und 6b ist dann die korrekte Positionierung des Kranes 21 und dessen Auslegerarmes 22 bezogen auf die aufzunehmende Last 19 in dem jeweiligen Quadranten des X-Y-Koordinatensystems 24 möglich.

Diese Ausrichtung des Kranes 21 und dessen Auslegearmes 22 erfolgt durch
- Messen der in den Kraftmessstellen (9) ermittelten Kraftanteilen (Fₖ₁, .... Fₖₙ),
- Berechnen der in vertikaler und horizontaler Richtung auf die Kraftmess-Hülse (1) einwirkenden Kräfte F₁ bis Fₙ aus den gemessenen Kraftanteilen Fₖ₁, ..., Fₖₙ
- Berechnen des Winkels (α) zwischen der horizontalen, vertikalen und resultierenden Kraftanteilen in Abhängigkeit von der Neigung des Kranauslegearmes und dessen Stellung in der Horizontalen,
   und/oder
- Berechnen des Versatzwinkels senkrecht zu der Längssachse (2) der Kraftmess-Hülse (1) aus der Differenz der Ist-Umschlingung und der Soll-Umschlingung an der Seilrolle (16) sowie der geometrischen Abmessung des Auslegerarms (22).

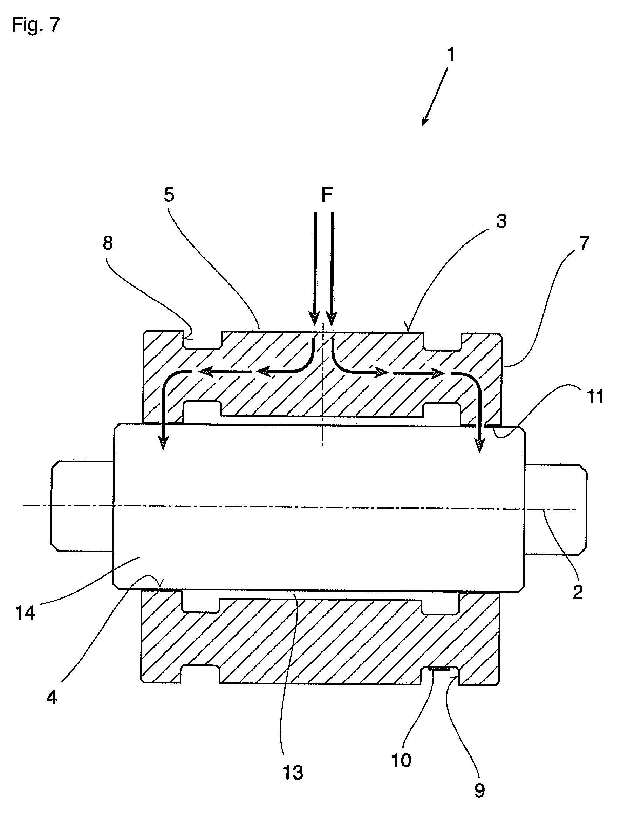

In Figur 7 ist der durch die Membrane 12 geleitete Kraftfluss gezeigt, der im Wesentlichen durch die Kräfte F₁ bis Fₙ und deren Drehmomente entsteht. Es sollen Biege- und/oder Scherkräfte in den Kraftmessstellen 9 erfassbar sein, aus denen anschließend die Wirkungsrichtung und der Betrag der äußeren Kräfte F₁ bis Fₙ ermittelbar ist. Aufgrund der errechneten bzw. gemessenen Kraftverteilungen ist die Ausrichtung des Mobil-Krans 21 und die Stellung des Kranauslagerarms 22 in der horizontalen und vertikalen Ebene einstellbar.

Weitere Aspekte der Erfindung sind darin zu sehen, dass die Kraftmess-Hülse dazu verwendet werden kann, die nachfolgenden Verfahrensschritte zu ermöglichen:
Verfahren zur Berechnung der auf eine Kraftmess-Hülse einwirkenden Kräfte (F₁, ..., Fₙ), wobei die Kraftmess-Hülse insbesondere nach einem der vorgenannten Ansprüche in einem Kranausleger eines Mobil-Krans eingebaut ist und auf den zumindest eine Seilrolle aufgesetzt ist, auf der ein Seil) mit einer aufzunehmenden Last abrollt, gekennzeichnet durch die Verfahrensschritte,
   - Messen der in den Kraftmessstellen ermittelten Kraftanteilen (Fₖ₁, ..., Fₖₙ),
   - Berechnen der in vertikaler und horizontaler Richtung auf die Kraftmess-Hülse einwirkenden Kräfte (F₁ bis Fₙ) aus den gemessenen Kraftanteilen (Fₖ₁, ..., Fₖₙ)
   - Berechnen des Winkels (α) zwischen der horizontalen, vertikalen und resultierenden Kraftanteilen in Abhängigkeit von der Neigung des Kranauslegearmes und dessen Stellung in der Horizontalen,
      und/oder
   - Berechnen des Versatzwinkels senkrecht zu der Längssachse der Kraftmess-Hülse aus der Differenz der Ist-Umschlingung und der Soll-Umschlingung an der Seilrolle sowie der geometrischen Abmessung des Auslegerarms.

Dass mit Hilfe der ermittelten Kraftverteilung Fₖ₁, ..., Fₖₙ) auf der Kraftmess-Hülse der Auslegerarm des Kranes) derart einstellbar ist, dass der Auslenkwinkel des Auslegearmes in Richtung der Längsachse der Kraftmess-Hülse und/oder senkrecht zu dieser in einem vorgegebenen Grenzbereich zwischen einem Ist- und Sollwert durch Anheben oder Absenken des Auslegerarms und/oder durch Verfahren des Kranes.

## Patentansprüche

1. Kraftmess-Hülse (1) mit mindestens einer äußeren und inneren Kraftübertragungsfläche (5, 6), die konzentrisch zu der Längsachse (2) der Hülse (1) verlaufen,
**dadurch gekennzeichnet, dass**
die innere Kraftübertragungsfläche (6) als zweiteilige zueinander beabstandete Ringflächen (11) ausgestaltet ist, die auf einer in die Hülse (1) eingesetzten Welle (14) oder Achse anliegen und durch die die auf die Hülse einwirkenden Kräfte (F₁, ..., Fₙ) übertragen sind, dass die Ringflächen (11) unmittelbar benachbart zu der jeweiligen Stirnseite (7) der Kraftmess-Hülse (1) angeordnet sind, dass seitlich versetzt und beabstandet zu einer oder zu den beiden Ringflächen (11) jeweils eine in die Außen- und/oder Innenmantelfläche (3, 4) der Kraftmess-Hülse (1) umlaufende Nut (8) eingearbeitet ist, dass in die jeweilige Nut (8) mindestens eine Kraftmessstelle (5), vorzugsweise in Form von Dehnmessstreifen (10), vorgesehen ist, dass seitlich versetzt zu den beiden Nuten (8) die äußere Kraftübertragungsfläche (5) angeordnet ist und dass die fluchtend zu der äußeren Kraftübertragungsfläche (5) verlaufende innere Mantelfläche (3) von der in die Kraftmess-Hülse (1) eingeschobenen Welle (14) oder Achse beabstandet ist.

2. Kraftmess-Hülse nach Anspruch 1,
**dadurch gekennzeichnet,**
**dass** die konzentrische Symmetrieachse (37) der äußeren Kraftübertragungsfläche (5) zu den jeweiligen konzentrischen Symmetrieachsen (39) der beiden Ringflächen (11) einen gleich groß bemessenen Abstand (a) aufweist.

3. Kraftmess-Hülse nach Anspruch 1 oder 2,
**dadurch gekennzeichnet,**
**dass** der Abstand (a) zwischen der konzentrischen Symmetrieachse (37) der äußeren Kraftübertragungsfläche (5) und der konzentrischen Symmetrieachsen (40) der inneren und/oder äußeren Nuten (8) gleich groß bemessen ist.

4. Kraftmess-Hülse nach einem der vorgenannten Ansprüche,
**dadurch gekennzeichnet,**
**dass** die Wandstärke (dₖ) der Kraftmess-Hülse (1) im Bereich der inneren und äußeren Kraftübertragungsflächen (5, 6) doppelt so groß bemessen ist als die Wandstärke (dₙ) der Kraftmess-Hülse (1) im Bereich der äußeren und/oder inneren Nuten (8).

5. Kraftmess-Hülse (1) nach einem der vorgenannten Ansprüche,
**dadurch gekennzeichnet,**
**dass** die äußere und innere Nut (8) konzentrisch fluchtend zueinander in die äußere und innere Mantelfläche (3,4) eingearbeitet sind und dass die Kraftmessstellen (9) zueinander gleichmäßig in Umfangsrichtung der Nuten (8) beabstandet angeordnet sind.

6. Kraftmess-Hülse (1) nach Anspruch 1,
**dadurch gekennzeichnet,**
**dass** die beiden Ringflächen (11) im belasteten Zustand zumindest bereichsweise an der Welle (14) oder Achse spielfrei anliegen.

7. Kraftmess-Hülse (1) nach Anspruch 1
**dadurch gekennzeichnet,**
**dass** der Abstand zwischen den beiden Ringflächen (11) und der konzentrischen Symmetrieebene der äußeren Kraftübertragungsfläche (5) unterschiedlich groß ausgestaltet ist.

## Claims

1. A force-measuring sleeve (1) having at least outer and inner force-transmitting surfaces (5, 6) extending concentrically to the longitudinal axis (2) of the sleeve (1) **characterized in that** the inner force-transmitting surface (6) is formed as two annular surfaces (11), which are distanced to each other and abut against a shaft (14) inserted into the sleeve (1) and transmitting the forces (F₁, ..., Fₙ) applied to the sleeve, that the annular surfaces (11) are arranged directly adjacent to the respective front side (7) of the force-measuring sleeve (1), that respectively one circumferential groove (8) is machined into the outer and/or inner circumferential surface (3, 4), which groove (8) is laterally displaced and distanced to one or both of the annular surfaces (11), that at least one force-measuring location (5), preferably strain gauges (10), is provided in the respective groove (8), that the outer force-transmitting surface (5) is arranged laterally displaced to both of the grooves (8), and that the inner circumferential surface (3), which extends in line to the outer force-transmitting surface (5), is distanced to the shaft (14) inserted into the force-measuring sleeve (1).

2. The force-measuring sleeve of claim 1 **characterized in that** the concentrical symmetry axis (37) of the outer force-transmitting surface (5) has a distance (a) to the respective concentrical symmetry axis (39) of both of the annular surfaces (11) which is dimensioned equally.

3. The force-measuring sleeve of claim 1 or 2 **characterized in that** the distance (a) between the concentrical symmetry axis (37) of the outer force-transmitting surface (5) and the concentrical symmetriy axis (40) of the inner and/or outer grooves (8) is dimensioned equally.

4. The force-measuring sleeve of any of the preceding claims **characterized in that** the wall thickness (dₖ) of the force-measuring sleeve (1) is dimensioned, in the region of the inner and outer force-transmitting surfaces (5, 6), twice as large as the wall thickness (dₙ) of the force-measuring sleeve (1) in the region of the outer and/or inner grooves (8).

5. The force-measuring sleeve (1) of any of the preceding claims **characterized in that** the outer and inner grooves (8) are machined concentrically and in line with each other into the outer and inner circumferential surfaces (3, 4), and that the force-measuring locations (9) are arranged at a uniform distance to each other along the circumferential direction of the grooves (8).

6. The force-measuring sleeve (1) of claim 1 **characterized in that** both of the annular surfaces (11) are in a clearance-free contact, at least in certain regions, with the shaft (14) in a loaded state.

7. The force-measuring sleeve (1) of claim 1 **characterized in that** the distance between both of the annular surfaces (11) and the concentrical plane of symmetry of the outer force-transmitting surface (5) are dimensioned differently in size.

## Revendications

1. Douille de mesure de force (1) avec au moins une face extérieure et une face intérieure de transmission de force (5, 6), qui sont concentriques à l'axe longitudinal (2) de la douille (1), **caractérisée en ce que** la face intérieure de transmission de force (6) est constituée de faces annulaires en deux parties espacées l'une de l'autre (11), qui s'appliquent sur un arbre (14) ou un axe introduit dans la douille (1) et par lesquelles les forces (F₁, ..., Fₙ) agissant sur la douille sont transmises, **en ce que** les faces annulaires (11) sont disposées à proximité immédiate de la face frontale respective (7) de la douille de mesure de force (1), **en ce que**, en position décalée latéralement et espacée d'une ou des deux faces annulaires (11), une rainure périphérique (8) est chaque fois usinée dans la face latérale extérieure et/ou intérieure (3, 4) de la douille de mesure de force (1), **en ce qu'**il est prévu dans la rainure respective (8) au moins un point de mesure de force (5), de préférence sous la forme d'une jauge de contrainte (10), **en ce que** la face extérieure de transmission de force (5) est disposée en position décalée latéralement par rapport aux deux rainures (8) et **en ce que** la face latérale intérieure (3) s'étendant en alignement avec la face extérieure de transmission de force (5) est espacée de l'arbre (14) ou de l'axe introduit dans la douille de mesure de force (1).

2. Douille de mesure de force selon la revendication 1, **caractérisée en ce que** l'axe de symétrie concentrique (37) de la face extérieure de transmission de force (5) présente une distance (a) de même valeur par rapport aux axes de symétrie concentriques respectifs (39) des deux faces annulaires (11).

3. Douille de mesure de force selon la revendication 1 ou 2, **caractérisée en ce que** la distance (a) entre l'axe de symétrie concentrique (37) de la face extérieure de transmission de force (5) et les axes de symétrie concentriques (40) des rainures intérieure et/ou extérieure (8) est de même valeur.

4. Douille de mesure de force selon l'une quelconque des revendications précédentes, **caractérisée en ce que** l'épaisseur de paroi (dₖ) de la douille de mesure de force (1) dans la région des faces intérieure et extérieure de transmission de force (5, 6) est deux fois plus grande que l'épaisseur de paroi (dₙ) de la douille de mesure de force (1) dans la région des rainures extérieure et/ou intérieure (8).

5. Douille de mesure de force (1) selon l'une quelconque des revendications précédentes, **caractérisée en ce que** la rainure extérieure et la rainure intérieure (8) sont usinées de façon concentrique en alignement l'une avec l'autre dans la face latérale extérieure et intérieure (3, 4) et **en ce que** les points de mesure de force (9) sont disposés à distance uniforme l'un de l'autre dans la direction périphérique des rainures (8).

6. Douille de mesure de force (1) selon la revendication 1, **caractérisée en ce que** les deux faces annulaires (11) s'appliquent, dans l'état chargé, au moins localement sans jeu sur l'arbre (14) ou l'axe.

7. Douille de mesure de force (1) selon la revendication 1, **caractérisée en ce que** la distance entre les deux faces annulaires (11) et le plan de symétrie concentrique de la face extérieure de transmission de force (5) est de valeur différente.
